(19) Europäisches Patentamt
European Patent Office
Office européen des brevets

(11) EP 1 157 994 B1

(12) **FASCICULE DE BREVET EUROPEEN**

(45) Date de publication et mention de la délivrance du brevet:
**29.12.2004 Bulletin 2004/53**

(51) Int Cl.[7]: **C07F 9/09**, C07F 9/32, C07F 9/40, B01J 20/32, B01J 21/00, B01J 23/00

(21) Numéro de dépôt: **01401237.1**

(22) Date de dépôt: **15.05.2001**

(54) **Matériaux comportant des groupements organiques contenant du soufre et du phosphoré liés par l'intermédiaire d'atomes d'oxygène à un oxyde minéral**

Material, das organische Schwefel- und Phosphorgruppen enthält, wobei die Phosphorgruppe über ein Sauerstoffatom an ein Metalloxid gebunden ist

Materials having organic groups containing sulfur and phosphorus bond through oxygen atoms to a mineral oxide

(84) Etats contractants désignés:
**DE ES FR IT NL**

(30) Priorité: **25.05.2000 FR 0006803**

(43) Date de publication de la demande:
**28.11.2001 Bulletin 2001/48**

(73) Titulaire: **Institut Français du Pétrole
92852 Rueil-Malmaison Cedex (FR)**

(72) Inventeurs:
- **Forestiere, Alain
69390 Vernaison (FR)**
- **Mutin, P-Hubert
34380 Clapiers (FR)**
- **Vioux, André
34980 Fonferrier Sur Lez (FR)**
- **Guerrero, Gilles
34500 Beziers (FR)**

(56) Documents cités:
**FR-A- 2 753 971** **US-A- 3 177 233**
**US-A- 4 994 429**

- **ALBERTI G ET AL: "LAYERED AND PILLARED METAL(IV) PHOSPHATES AND PHOSPHONATES" ADVANCED MATERIALS,DE,VCH VERLAGSGESELLSCHAFT, WEINHEIM, vol. 8, no. 4, 1 avril 1996 (1996-04-01), pages 291-303, XP000587105 ISSN: 0935-9648**
- **SEGAWA K ET AL: "CATALYST DESIGN OF TWO-DIMENSIONAL ZIRCONIUM PHOSPHONATES" JOURNAL OF MOLECULAR CATALYSIS,CH,LAUSANNE, vol. 74, no. 1 - 03, 1992, pages 213-221, XP000675663**
- **DINES M B ET AL: "DERIVATED LAMELLAR PHOSPHATES AND PHOSPHONATES OF M(IV) IONS" INORGANIC CHEMISTRY,US,AMERICAN CHEMICAL SOCIETY. EASTON, vol. 20, no. 1, 1981, pages 92-97, XP000674613 ISSN: 0020-1669**

Remarques:
Le dossier contient des informations techniques présentées postérieurement au dépôt de la demande et ne figurant pas dans le présent fascicule.

EP 1 157 994 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne des matériaux comportant des groupements organiques contenant du phosphore lié par l'intermédiaire de liaisons covalentes à un oxyde minéral et un autre groupe fonctionnel terminal tel que par exemple un groupe fonctionnel contenant du soufre ainsi que leur préparation. Elle concerne également les diverses applications de ces matériaux notamment en catalyse en particulier quand le groupement organique contenant du soufre est un groupe terminal sulfonique ou un dérivé sulfonique, également comme adsorbant ou complexant en particulier quand le groupement organique contenant du soufre est un groupe terminal thiol ou un dérivé du groupe thiol tel que par exemple un sulfure ou un polysulfure.

Il est connu de l'état de la technique (FR-A- 2 753 971 ; Alberti G. et al, Advanced Materais, vol.8 n°4, 1er avril 1996, pages 291-303 ; Segawa K. et al, Journal of Molecular Catalysis, vol.74 N°1-03, 1992, pages 213-221 ; Dines et al, Inorganic Chemistry, vol.20, n° 1, 1981, pages 92-97) des composés moléculaires de type phosphate et phosphonate sous leur forme cristallisée. En particulier, il est connu de ces documents des composés de formule $Zr(O_3PCH_2SO_3H)_2$, $Zr(O_3PCH_2\ CH_2SH)_2$ ou $Zr(O_3P(CH_2)_3SO_3H)_2$ dans lesquels les atomes de zirconium sont répartis sur un feuillet et sont reliés par des atomes d'oxygène à des atomes de phosphore. Il est également connu du brevet US3.177.233 un sel métallique dans lequel ledit métal est lié à un ligand comprenant un atome de phosphore et par l'intermédiaire de celui-ci.

Les matériaux selon l'invention offrent une alternative aux matériaux résultant du greffage de groupements organosiliciés sur des oxydes minéraux ou des polysiloxanes réticulés, pour l'hétérogènéisation par greffage de fonctions organiques. L'utilisation de groupements phosphorés et organophosphorés présente différents avantages par rapport à l'utilisation de groupement organosiliciés. La facilité de formation et la stabilité des liaisons P-O-métal permet l'utilisation de matrices d'oxydes minéraux autres que la silice (par exemple l'alumine, le dioxyde de zirconium ou le dioxyde de titane) offrant une meilleure stabilité chimique. L'absence de réactions d'homocondensation POH/POH dans les conditions usuelles de préparation assure une meilleure homogénéité c'est-à-dire la formation des seules liaisons P-O-métal à l'exclusion des liaisons P-O-P.

Des matériaux utilisés en particulier comme adsorbant obtenus par réaction entre les sites réactifs de particules d'oxydes/hydroxydes sur un composé phosphoré contenant un ou plusieurs groupes organiques acides sont par exemple décrits dans les brevets US 4,788,176, US 4,994,429. Selon l'enseignement de ces brevets ces composés sont obtenus par greffage des oxydes/hydroxydes à l'aide de composés acides tels que des dérivés des acides phosphoniques ou phosphiniques. Le greffage débute à un pH très acide par exemple égal à 1,8 ce qui entraîne une formation de phosphonate d'aluminium dans le cas où les particules sont des particules d'alumine. Par ailleurs l'utilisation de composés acides pour effectuer le greffage peut conduire à la formation de multicouches ce qui est défavorable dans les utilisations de ces solides notamment en catalyse. Seul le brevet US 4,994,429 donne un exemple d'un oxyde d'aluminium greffé par un groupe fonctionnel contenant du soufre sous forme d'un groupe sulfonique qui est introduit par mise en réaction du solide minéral, greffé à l'aide de l'acide phényl-phosphonique, avec de l'acide sulfurique fumant c'est-à-dire contenant de l'anhydride sulfurique, donc un milieu très acide avec un risque non négligeable d'attaque de l'alumine.

On a maintenant découvert un solide fonctionnalisé et une méthode de préparation par gélification à partir de précurseurs moléculaires de ce solide permettant de s'affranchir des inconvénients de la méthode de préparation de l'art antérieur et d'introduire la fonctionnalité souhaitée soit avant ou après l'étape de gélification.

Dans sa définition la plus large le solide fonctionnalisé objet de la présente invention peut se définir comme un matériau obtenu par gélification comportant des groupements organiques contenant du soufre et du phosphore reliés entre eux par une chaîne hydrocarbonée et liés par l'intermédiaire du phosphore et d'atomes d'oxygènes à un oxyde minéral d'un ou plusieurs éléments M, lesdits matériaux étant caractérisés en ce qu'ils comportent des liaisons M-O-M', M' représentant un élément d'un oxyde minéral identique ou différent de M, en ce que le rapport élément M sur phosphore est d'environ 0,5 : 1 à environ 500 : 1 et en ce que chaque atome de phosphore des groupements phosphorés forme au moins une liaison P-O-M et/ou P-O-M'.

Selon une forme particulière le matériau de la présente invention est un matériau dans lequel M et M' représente le même élément. Le rapport élément M sur phosphore est le plus souvent d'environ 0,5 : 1 à environ 150 : 1 et de préférence d'environ 0,5 : 1 à environ 20 : 1. Le rapport soufre sur phosphore est habituellement d'environ 0,05 : 1 à environ 10 : 1, souvent d'environ 0,1 : 1 à environ 5 : 1 et le plus souvent d'environ 0,4 : 1 à environ 2 : 1.

Le matériau de la présente invention est habituellement un matériau dans lequel M et M' désigne un élément des groupes IB, IIB, IIIB, IVB, VB, VIB, VIIB, VIII, IIIA, IVA, des lanthanides ou des actinides de la classification périodique des éléments et souvent M et M' désigne un élément choisi dans le groupe comprenant le titane, le zirconium, le fer, l'aluminium, le silicium et l'étain et de préférence parmi les éléments du groupe comprenant le titane, le zirconium et l'aluminium.

Le groupement organique contenant du soufre est de préférence choisi parmi les groupes thiols et leurs dérivés, les groupes acides sulfoniques et leurs dérivés.

Les groupements phosphorés sont habituellement des groupements de type phosphates, phosphonates ou phosphinates représentés ci-après

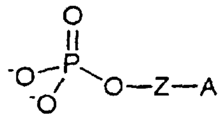

Phosphate

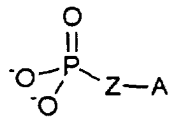

Phosphonate

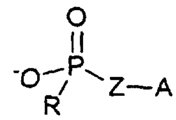

Phosphinate

*Exemples de groupements phosphorés*

Dans cette représentation A désigne le groupement organique contenant du soufre et Z est un groupe hydrocarboné défini ci-après en liaison avec le procédé de préparation des matériaux selon la présente invention.

L'invention concerne également un procédé de préparation d'un matériau tel que défini ci-devant dans lequel on met en contact au moins un composé phosphoré de formule I définie ci-après (éventuellement en solution dans un solvant) avec au moins un précurseur de l'oxyde minéral qui peut être un dérivé alcoxylé de formule $M(OR')_z$ ou un dérivé halogéné de formule $M(Hal)_z$ dans lesquelles z est égal à la valence de l'élément M défini ci-devant, Hal est un atome d'halogène par exemple un atome de chlore ou de brome, R' est un groupe hydrocarboné, ou un autre composé de l'élément M (carboxylate, sulfate, nitrate, hydroxyde ou oxychlorure par exemple). On utilisera le plus souvent au moins un précurseur choisi dans le groupe formé par les dérivés alcoxylés de formule $M(OR')_z$ et les dérivés halogénés de formule $M(Hal)_z$ dans lesquelles z est égal à la valence de l'élément M défini ci-devant, Hal est un atome d'halogène par exemple un atome de chlore ou de brome, R' est un groupe hydrocarboné contenant le plus souvent de 1 à 12 atomes de carbone.

La formule des composés phosphorés peut s'écrire:

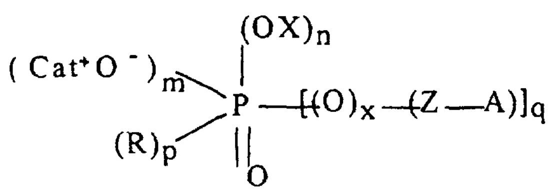 I

dans laquelle la somme m+n+p+q est égale à 3, m =0, 1 ou 2, q = 0, 1 ou 2, x=0 ou 1, p=0, 1 ou 2, R est un groupe hydrocarboné, X est un groupe hydrocarboné ou un groupe de formule $SiR''_3$ dans lequel R" est un groupe hydrocarboné, Z est un groupe hydrocarboné comportant éventuellement des hétéroatomes, $Cat^-$ est un cation monovalent et A est un groupe contenant du soufre ou un groupe réactif transformable en un groupe contenant du soufre.

Le plus souvent on met en contact un dérivé alcoxylé de formule $M(OR')_z$ dans laquelle R' est un groupe alcoyle ayant de 1 à 12 atomes de carbone et de préférence de 1 à 6 atomes de carbone avec une solution dans un solvant du composé phosphoré de formule I dans laquelle $Cat^-$ est un proton $H^-$, R est un groupe alcoyle ayant de 1 à 18 atomes de carbone ou un groupe aryle ayant de 6 à 18 atomes de carbone ou un groupe alkyl-aryle ayant de 7 à 24 atomes de carbone, X est un groupe de formule $SiR''_3$ dans lequel R" est un groupe hydrocarboné ayant par exemple de 1 à 18 atomes de carbone ou un groupe aryle ayant par exemple de 6 à 18 atomes de carbone ou un groupe alkyl-aryle ayant par exemple de 7 à 24 atomes de carbone, Z est un groupe alkylique bivalent saturé ou non ayant de 1 à 18 atomes de carbone ou un groupe arylique bivalent ayant de 6 à 18 atomes de carbone ou un groupe bivalent alkyl-arylique ou aryl-alkylique ayant de 7 à 24 atomes de carbone et A est un groupe contenant du soufre choisi parmi les groupes thiols et leurs dérivés, les groupes acides sulfoniques et leurs dérivés. Ce groupe A est de préférence un groupe thiol de formule -SH ou un groupe sulfonique de formule $-SO_3^-Cat'^+$ dans lequel $Cat'^+$ représente un proton $H^-$ ou un cation monovalent tel que par exemple un cation d'un métal alcalin. Le groupe A peut également être un groupe réactif transformable en un groupe contenant du soufre, le plus souvent un groupe halogéné.

Le composé phosphoré de formule I est de préférence un composé de formule I dans laquelle m=2, q=1 et n=p=zéro ou un composé de formule I dans laquelle n=2, q=1 et m=p=zéro. La formation du solide fonctionnalisé de la présente invention peut être décrite comme résultant de la formation de liaisons M-O-P ou M'-O-P par condensation

des fonctions P-OX ou P-O$^-$Cat$^+$ du composé phosphoré avec les fonctions du dérivé de l'élément M ou M' et par complexation du groupement phosphoryl sur l'élément M, et de la formation de liaisons M-O-M ou M'-O-M par hydrolyse-condensation des fonctions de l'élément M ou M'.

Le composé phosphoré de formule I que l'on utilise est de préférence un composé dans lequel Z est un groupe alkylique bivalent saturé ayant de 1 à 6 atomes de carbone, de préférence un groupe polyméthylène et souvent un groupe polyméthylène ayant de 1 à 4 atomes de carbone. Le solvant du composé phosphoré de formule I est par exemple un solvant organique tel que le tétrahydrofurane ou le diméthylsulfoxyde ou le dichlorométhane, ou un solvant minéral tel que de l'eau On ne sortirai pas du cadre de la présente invention en utilisant un mélange d'au moins deux solvants.

Les diverses étapes de préparation des matériaux selon la présente invention sont individuellement des étapes classiques bien connues des hommes du métier et dont une référence sera donnée dans les exemples suivants qui illustre l'invention sans en limiter la portée.

## Exemple1

Dans cet exemple on prépare un solide fonctionnalisé contenant un groupe bromo qui est ensuite transformé en un solide fonctionnalisé contenant un groupe thiol.
Dans une première étape on a préparé selon la réaction d'Arbuzov (March, J Advanced Organic Chemistry, 3ième édition, John Wiley & Sons, New-York, 1985 p. 848) un phosphonate de formule $Br(CH_2)_3PO_3Et_2$ (I'). La deuxième étape de cette préparation est une hydrolyse des liaisons P-OEt en liaison P-OH qui permet d'obtenir l'acide phosphonique de formule $Br(CH_2)_3PO_3H_2$ (I).

$$P(OEt)_3 + Br\text{-}(CH_2)_3\text{-}Br \rightarrow Br(CH_2)_3PO_3Et_2 + EtBr$$

$$Br(CH_2)_3PO_3Et_2 + 2\ HCl \rightarrow Br(CH_2)_3PO_3H_2 + 2\ EtCl$$

Dans un réacteur sous atmosphère d'azote, on introduit 1 équivalent de triéthylphosphite et 1,5 équivalent de 1,3-dibromopropane. Le réacteur est porté à 140 °C maintenu à cette température, sous agitation pendant 24 h. Après distillation sous une pression de 0,1 millibar (mbar) (10 Pascal) à une température moyenne en fond de colonne de 90 °C on obtient le diéthyl bromopropylphosphonate de formule $Br(CH_2)_3PO_3Et_2$ (I') avec un rendement de 60 % en moles par rapport au triéthylphosphite introduit. Ce composé de formule (I') est ensuite porté au reflux pendant 24 heures dans de l'acide chlorhydrique (HCl) concentré puis après évaporation sous une pression de 10 mbar à une température de 90 °C pendant 1 heure et recristallisation dans l'acétonitrile on obtient l'acide phosphonique de formule $Br(CH_2)_3PO_3H_2$ (I).

Dans un réacteur on introduit à température ambiante 2,028 g soit 0,01 mole de l'acide phosphonique de formule (I) $Br(CH_2)_3PO_3H_2$ dissous dans 15 millilitres (ml) de tétrahydrofurane sec (THF), puis sous atmosphère d'azote on ajoute sous agitation 0,03 mole soit 8,53 g de tétraisopropoxytitanate de formule $Ti(O^iPr)_4$. On ajoute ensuite goutte à goutte 0,05 mole soit 0,9 g d'eau diluée dans 10 ml de THF. Après 2 heures d'agitation à température ambiante le solide obtenu est lavé successivement à l'aide de THF, de méthanol puis d'acétone. Ce solide est ensuite séché sous une pression de 0,05 mbar à 100 °C pendant 5 heures pour donner le solide A. Le solide A est ensuite fonctionnalisé selon la procédure ci-après utilisant une réaction classique de remplacement de l'atome d'halogène par un groupe thiol décrite dans le livre de March, J Advanced Organic Chemistry, 3 ième édition, John Wiley & Sons, New-York, 1985 p. 360. Dans un réacteur contenant 0,56 g soit 10 millimoles d'hydrogénosulfure de sodium en solution dans 25 ml de méthanol on ajoute 1,3 g du gel solide A. Le tout est ensuite porté au reflux pendant 10 heures sous atmosphère d'azote. Après filtration on récupère un solide que l'on lave successivement avec du méthanol, de l'eau et de l'acétone. Le solide est ensuite séché sous une pression de 0,05 mbar à 100°C pendant 5 heures pour donner le solide B.

L'analyse élémentaire du solide B donne les résultats suivant : Ti 31,9 %, P 6,1 %, S 4,4 %, Br inférieur à 0,1 %. Soit un rapport Ti/P de 3,4 et un rapport S/P de 0,7.

Le spectre de RMN du phosphore 31 du solide B (voir figure 1) réalisé sur un appareil Bruker Avance 300 MHz montre un pic large à 26,2 ppm correspondant à des groupes phosphonates liés à des atomes de titane ; le spectre de RMN du carbone 13 du solide B réalisé sur un appareil Bruker Avance 300 MHz montre trois pics à 25,9 ppm, 22,2 ppm et 39,3 ppm correspondant aux trois groupes méthylènes dans l'enchaînement $P\text{-}CH_2\text{-}CH_2\text{-}CH_2\text{-}S$.

## Exemple 2

Dans cet exemple on prépare un solide fonctionnalisé contenant un groupe acide sulfonique.

Dans une première étape on a préparé selon la procédure décrite précédemment le phosphonate de formule $Br(CH_2)_3PO_3Et_2$ (I'). Ce phosphonate est ensuite fonctionnalisé selon la procédure ci-après utilisant une réaction classique de remplacement de l'atome d'halogène par un groupe sulfonate décrite dans le livre de March, J Advanced Organic Chemistry, 3 ième édition, John Wiley & Sons, New-York, 1985 p. 363 afin d'obtenir le phosphonate de formule $NaSO_3(CH_2)_3PO_3Et_2$ (II). La dernière étape de cette préparation est une hydrolyse des liaisons P-OEt en liaison P-OH qui permet d'obtenir l'acide phosphonique de formule $HSO_3(CH_2)_3PO_3H_2$ (II').

$$Br(CH_2)_3PO_3Et_2 + Na_2SO_3 \rightarrow NaSO_3(CH_2)_3PO_3Et_2 + NaBr$$

$$NaSO_3(CH_2)_3PO_3Et_2 + 2\ HCl \rightarrow HSO_3(CH_2)_3PO_3H_2 + 2\ Et$$

Dans un réacteur sous atmosphère d'azote, on ajoute 0,1 équivalent (25,91 g) de diéthyl hromopropylphosphonate $Br(CH_2)_3PO_3Et_2$ (I') à une solution bouillante de 0,13 équivalent (12,61 g) de sulfite de sodium $Na_2SO_3$ dans 50 ml d'eau. Après 1 heure à reflux la solution est refroidie puis éluée à travers une résine Dowex 50W-X8 ($H^-$). Après évaporation sous pression réduite (15 mbar) à 100 °C on obtient une huile qui est portée au reflux pendant 24 heures dans de l'acide chlorhydrique (HCl) concentré (32 % en poids). Après évaporation sous pression réduite (15 mbar) à 100 °C on obtient un liquide visqueux. Ce liquide est repris dans 250 ml d'eau bouillante. La solution obtenue est diluée à travers une résine Dowex 50 W-XB ($H^-$). Le précipité obtenu est filtré, puis repris dans 250 ml d'eau et on ajoute de l'acide chlorhydrique concentré jusqu'à dissolution. La solution obtenue est éluée à travers une résine Dowex 50W-X8 ($H^-$). Après évaporation sous pression réduite (10 mbar) à 90 °C puis sous pression réduite (0,05 mbar) à 90 °C pendant 15 heures, on obtient l'acide phosphonique de formule $HSO_3(CH_2)_3PO_3H_2$ (II').

Dans un réacteur on introduit à température ambiante 1,56 g soit 0,01 mole de l'acide phosphonique de formule $HSO_3(CH_2)_3PO_3H_2$ (II') dissous dans 25 millilitres (ml) de diméthylsulfoxyde (DM50), puis sous atmosphère d'azote on ajoute sous agitation 0,05 mole soit 14,21 g de tétraisopropoxytitanate de formule $Ti(O^iPr)_4$. On ajoute ensuite goutte à goutte 0,1 mole soit 1,8 g d'eau diluée dans 15 ml de THF.
Après 2 heures d'agitation à température ambiante on isole par filtration un solide que l'on lave successivement avec du THF, du méthanol, de l'eau et de l'acétone. Le solide est ensuite séché sous une pression de 0,05 mbar à 100°C pendant 5 heures pour donner le solide C.

L'analyse élémentaire du solide C donne les résultats suivant : Ti 35,6%, P4,8%, S 6,5%. Soit un rapport Ti/P de 4,8 et un rapport S/P de 0,8.
Le spectre de RMN du phosphore 31 du solide C (voir figure 1) réalisé sur un appareil Bruker Avance 300 MHz montre un pic large à 25,1 ppm correspondant à des groupes phosphonates liés à des atomes de titane ; le spectre de RMN du carbone 13 du solide C réalisé sur un appareil Bruker Avance 300 MHz montre trois pics à 26,2 ppm, 19,9 ppm et 53,1 ppm correspondant aux trois groupes méthylènes dans l'enchaînement P-$CH_2$-$CH_2$-$CH_2$-S.

## Revendications

1. Matériaux obtenus par gélification comportant des groupements organiques contenant du soufre et du phosphore reliés entre eux par une chaîne hydrocarbonée et liés par l'intermédiaire du phosphore et d'atomes d'oxygènes à un oxyde minéral d'un ou plusieurs éléments M, lesdits matériaux étant **caractérisés en ce qu'**ils comportent des liaisons M-O-M', M' représentant un élément d'un oxyde minéral identique ou différent de M, **en ce que** le rapport élément M sur phosphore est d'environ 0,5 : 1 à environ 500 : 1 et **en ce que** chaque atome de phosphore des groupements phosphorés forme au moins une liaison P-O-M et/ou P-O-M'.

2. Matériaux selon la revendication 1 dans lesquels M et M' représentent le même élément.

3. Matériaux selon la revendication 1 ou 2 dans lequel M et M' désignent un élément des groupes IB, IIB, IIIB, IVB, VB, VIB, VIIB, VIII, IIIA, IVA, des lanthanides ou des actinides de la classification périodique des éléments.

4. Matériaux selon l'une des revendications 1 à 3 dans lequel M et M' sont choisis parmi les éléments du groupe comprenant le titane, le zirconium, le fer, l'aluminium, le silicium et l'étain et de préférence parmi les éléments du groupe comprenant le titane, le zirconium et l'aluminium.

5. Matériaux selon l'une des revendications 1 à 4 dans lequel le groupement organique contenant du soufre est choisi parmi les groupes thiols et leurs dérivés, les groupes acides sulfoniques et leurs dérivés.

**6.** Procédé de préparation d'un matériau selon l'une des revendications 1 à 5 dans lequel on met en contact au moins un dérivé halogéné de formule $M(Hal)_z$ ou au moins un dérivé alcoxylé de formule $M(OR')_z$ dans lesquelles z est égal à la valence de l'élément M, Hal est un atome d'halogène, R' est un groupe hydrocarboné, ou au moins un composé de l'élément M choisi dans le groupe formé par les carboxylates, les sulfates, les nitrates, les hydroxydes et les oxychlorures, avec au moins une solution dans un solvant d'au moins un composé phosphoré de formule I

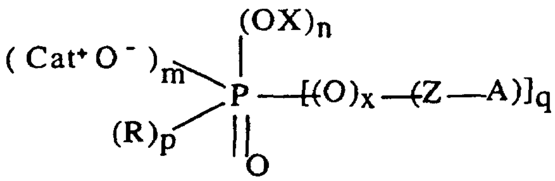

(I)

dans laquelle la somme m+n+p+q est égale à 3, m =0, 1 ou 2, q = 0, 1 ou 2, x=0 ou 1, p=0, 1 ou 2, R est un groupe hydrocarboné, X est un groupe hydrocarboné ou un groupe de formule SiR"3 dans lequel R" est un groupe hydrocarboné, Z est un groupe hydrocarboné comportant éventuellement des hétéroatomes, $Cat^+$ est un cation monovalent et A est un groupe contenant du soufre ou un groupe réactif transformable en un groupe contenant du soufre.

**7.** Procédé selon la revendication 6 dans lequel on met en contact un dérivé alcoxylé de formule $M(OR')_z$ dans laquelle R' est un groupe alcoyle ayant de 1 à 12 atomes de carbone et de préférence de 1 à 6 atomes de carbone avec une solution dans un solvant du composé phosphoré de formule I dans laquelle $Cat^+$ est un proton $H^+$, R est un groupe alcoyle ayant de 1 à 18 atomes de carbone ou un groupe aryle ayant de 6 à 18 atomes de carbone ou un groupe alkyl-aryle ayant de 7 à 24 atomes de carbone, X est un groupe de formule SiR"3 dans lequel R" est un groupe hydrocarboné, Z est un groupe alkylique bivalent saturé ou non ayant de 1 à 18 atomes de carbone ou un groupe arylique bivalent ayant de 6 à 18 atomes de carbone ou une groupe bivalent alkyl-arylique ou aryl-alkylique ayant de 7 à 24 atomes de carbone et A est un groupe contenant du soufre choisi parmi les groupes thiols et leurs dérivés, les groupes acides sulfoniques et leurs dérivés.

**8.** Procédé selon la revendication 6 ou 7 dans lequel le composé phosphoré de formule I est un composé dans lequel m=2, q=1 et n=p=zéro.

**9.** Procédé selon la revendication 6 ou 7 dans lequel le composé phosphoré de formule I est un composé dans lequel n=2, q=1 et m=p=zéro.

**10.** Procédé selon l'une des revendications 6 à 9 dans laquelle le composé phosphoré de formule I est un composé dans lequel Z est un groupe alkylique bivalent saturé ayant de 1 à 6 atomes de carbone de préférence un groupe polyméthylène.

**11.** Procédé selon l'une des revendications 6 à 10 dans laquelle le solvant du composé phosphoré est du tétrahydrofurane ou du diméthylsulfoxyde ou du dichlorométhane ou de l'eau.

## Patentansprüche

**1.** Materialien, erhalten durch Gelifizierung, welche organische Gruppen umfassen, die Schwefel und Phosphor enthalten und untereinander durch eine Kohlenwasserstoffkette verbunden sind und mittels Phosphor- und Sauerstoffatomen mit einem mineralischen Oxid von einem oder mehreren Elementen M verbunden sind, wobei diese Materialien **dadurch gekennzeichnet sind, dass** sie M-O-M'-Bindungen aufweisen, wobei M' ein Element eines mineralischen Oxids darstellt, das von M verschieden oder identisch ist und dadurch, dass das Verhältnis Element M zu Phosphor von etwa 0,5:1 bis etwa 500:1 ist und dadurch, dass jedes Phosphoratom der Phosphorgruppen wenigstens eine Bindung P-O-M und/oder P-O-M' bildet.

**2.** Materialien nach Anspruch 1, in denen M und M' dasselbe Element darstellen.

**3.** Materialien nach Anspruch 1 oder 2, in denen M und M' die Elemente der Gruppen IB, IIB, IIIB, IVB, VB, VI, VII, VIII, IIIA, IVA, der Lanthanide oder Actinide des Periodensystems der Elemente bezeichnen.

**4.** Materialien nach einem der Ansprüche 1 bis 3, in denen M und M' gewählt sind unter den Elementen der Gruppe, die Titan, Zirkonium, Eisen, Aluminium, Silizium und Zinn umfasst und vorzugsweise unter den Elementen der Gruppe, die Titan, Zirkonium und Aluminium umfasst.

**5.** Materialien nach einem der Ansprüche 1 bis 4, in denen die organische Gruppe, die Schwefel enthält, gewählt ist unter den Thiolgruppen und deren Derivaten, den Sulfonsäuregruppen und deren Derivaten.

**6.** Verfahren zur Herstellung eines Materials nach einem der Ansprüche 1 bis 5, bei dem man wenigstens ein Halogenderivat der Formel $M(Hal)_z$ oder wenigstens ein alkoxyliertes Derivat der Formel $M(OR')_z$ kontaktiert, in denen z gleich der Valenz des Elements M ist, Hal ein Halogenatom ist, R' eine Kohlenwasserstoffgruppe ist oder wenigstens einer Verbindung des Elements M, gewählt aus der Gruppe, die gebildet wird durch die Carboxylate, die Sulfate, die Nitrate, die Hydroxide und die Oxychloride, mit wenigstens einer Lösung in einem Lösungsmittel von wenigstens einer phosphorhaltigen Verbindung der Formel I:

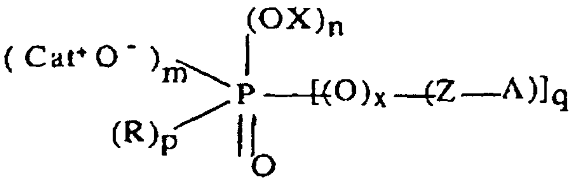

(I)

in der die Summe m+n+p+q gleich 3, m=0, 1 oder 2, q=0, 1 oder 2, x=0 oder 1, p= 0, 1 oder 2, R eine Kohlenwasserstoffgruppe, X eine Kohlenwasserstoffgruppe oder eine Gruppe der Formel $SiR''_3$ ist, in der R" eine Kohlenwasserstoffgruppe ist, Z eine Kohlenwasserstoffgruppe ist, die gegebenenfalls Heteroatome umfasst. $Cat^+$ ein monovalentes Kation ist und A eine Gruppe ist, die Schwefel oder eine reaktive Gruppe enthält, die in eine schwefelhaltige Gruppe umwandelbar ist.

**7.** Verfahren nach Anspruch 6, bei dem man ein alkoxyliertes Derivat der Formel $M(OR')_z$ kontaktiert, in der R' eine Alkylgruppe mit 1 bis 12 Kohlenstoffatomen und vorzugsweise 1 bis 6 Kohlenstoffatomen ist, mit einer Lösung in einem Lösungsmittel von einer Phosphorverbindung der Formel I, in der $Cat^+$ ein Proton H+ ist, R eine Alkylgruppe mit 1 bis 18 Kohlenstoffatomen oder eine Arylgruppe mit 6 bis 18 Kohlenstoffatomen oder eine Alkyl-Arylgruppe mit 7 bis 24 Kohlenstoffatomen ist, X eine Gruppe der Formel $SiR''_3$ ist, in der R" eine Kohlenwasserstoffgruppe ist, Z eine bivalente, gegebenenfalls gesättigte Alkylgruppe mit 1 bis 18 Kohlenstoffatomen oder eine bivalente Arylgruppe mit 6 bis 18 Kohlenstoffatomen oder eine bivalente Alkyl-arylische oder Arylalkylische Gruppe mit 7 bis 24 Kohlenstoffatomen ist und A eine Gruppe ist, die Schwefel enthält, gewählt unter den Thiolgruppen und deren Derivaten, den Sulfonsäuregruppen und deren Derivaten.

**8.** Verfahren nach Anspruch 6 oder 7, in dem die Phosphorverbindung mit Formel I eine Verbindung ist, in der m=2, q=1 und n=p=Null ist.

**9.** Verfahren nach Anspruch 6 oder 7, bei dem die Phosphorverbindung mit Formel I eine Verbindung ist, in der n=2, q=1 und m=p=Null ist.

**10.** Verfahren nach einem der Ansprüche 6 bis 9, in dem die Phosphorverbindung mit Formel I eine Verbindung ist, in der Z eine bivalente gesättigte Alkylgruppe ist mit 1 bis 6 Kohlenstoffatomen, vorzugsweise eine Polymethylengruppe.

**11.** Verfahren nach einem der Ansprüche 6 bis 10, in der das Lösungsmittel der Phosphorverbindung Tetrahydrofuran oder Dimethylsulfoxyd oder Dichlormethan oder Wasser ist.

## Claims

**1.** Materials prepared by gel formation comprising organic groups containing sulphur and phosphorous bonded together by a hydrocarbon chain and bonded via phosphorous and oxygen atoms to a mineral oxide of one or more elements M, said materials being **characterized in that** they comprise M-O-M' bonds, M' representing an element

of a mineral oxide identical to or different from M, **in that** the ratio of said element M to the phosphorous is about 0.5:1 to about 500:1, and **in that** each phosphorous atom of the phosphorous-containing groups forms at least one P-O-M bond and/or P-O-M' bond.

**2.** Materials according to claim 1, in which M and M' represent the same element.

**3.** Materials according to claim 1 or claim 2, in which M and M' represent an element from groups IB, IIB, IIIB, IVB, VB, VIB, VIIB, VIII, IIIA, IVA, the lanthanides or the actinides of the periodic table.

**4.** Materials according to any one of claims 1 to 3, in which M and M' are selected from elements from the group formed by titanium, zirconium, iron, aluminium, silicon and tin, and preferably selected from elements from the group formed by titanium, zirconium and aluminium.

**5.** Materials according to any one of claims 1 to 4, in which the organic sulphur-containing group is preferably selected from thiol groups and their derivatives or from acid sulphonic groups and their derivatives.

**6.** A process for preparing a material according to any one of claims 1 to 5, in which at least one halogenated derivative with formula $M(Hal)_z$ or at least one alkoxylated derivative with formula $M(OR')_z$, where z is equal to the valency of the element M, Hal is a halogen atom, R' is a hydrocarbon group, or at least one compound of element M selected from the group formed by carboxylates, sulphates, nitrates, hydroxides and oxychlorides is brought into contact with at least one solution in a solvent of at least one phosphorous-containing compound with formula I :

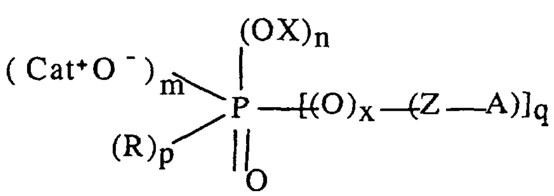

I

where the sum m+n+p+q is equal to 3, m=0, 1 or 2, q=0, 1 or 2, x=0 or 1, p=0, 1 or 2, R is a hydrocarbon group, X is a hydrocarbon group or a group with formula $SiR''_3$ where R" is a hydrocarbon group, Z is a hydrocarbon group optionally comprising heteroatoms, $Cat^+$ is a monovalent cation and A is a sulphur-containing group or a reactive group that can be transformed into a sulphur-containing group.

**7.** A process according to claim 6, in which an alkoxylated derivative with formula $M(OR')_z$, where R' is an alkyl group containing 1 to 12 carbon atoms, preferably 1 to 6 carbon atoms, is brought into contact with a solution in a solvent of a phosphorous-containing compound with formula I where $Cat^+$ is a proton $H^+$, R is an alkyl group containing 1 to 18 carbon atoms or an aryl group containing 6 to 18 carbon atoms or an alkyl-aryl group containing 7 to 24 carbon atoms, X is a group with formula $SiR''_3$, where R" is a hydrocarbon group, Z is a saturated or unsaturated bivalent alkyl group containing 1 to 18 carbon atoms or a bivalent aryl group containing 6 to 18 carbon atoms or a bivalent alkyl-aryl or aryl-alkyl group containing 7 to 24 carbon atoms and A is a sulphur-containing group selected from thiol groups and their derivatives and sulphonic acid groups and their derivatives.

**8.** A process according to claim 6 or claim 7, in which the phosphorous-containing compound with formula I is a compound in which m=2, q=1 and n=p=zero.

**9.** A process according to claim 6 or claim 7, in which the phosphorous-containing compound with formula I is a compound in which n=2, q=1 and m=p=zero.

**10.** A process according to any one of claims 6 to 9, in which the phosphorous-containing compound with formula I is a compound in which Z is a saturated bivalent alkyl compound containing 1 to 6 carbon atoms, preferably a polymethylene group.

**11.** A process according to any one of claims 6 to 10, in which the solvent for the phosphorous-containing compound is tetrahydrofuran, dimethylsulphoxide, dichloromethane or water.

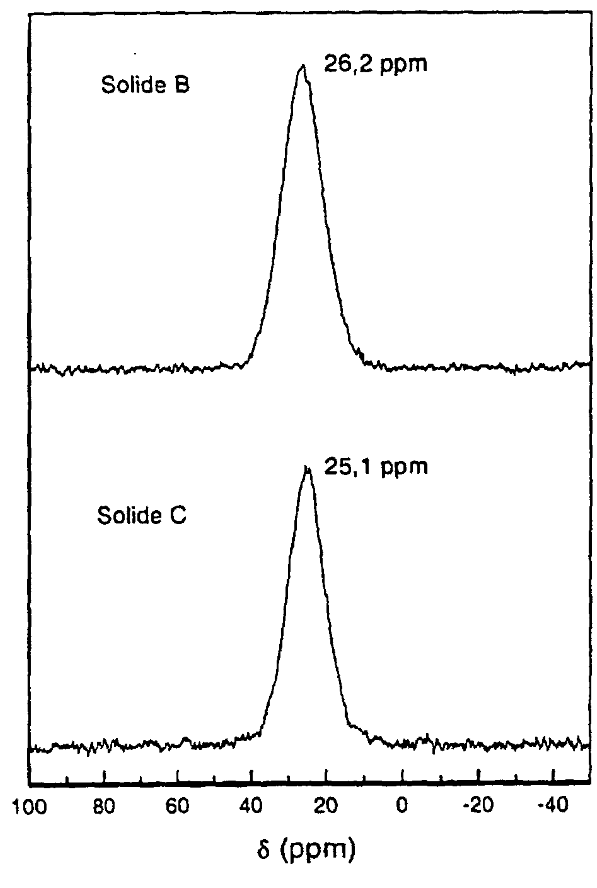
Solide B
26,2 ppm
Solide C
25,1 ppm
100
80
60
40
20
0
-20
-40
δ (ppm)